(19) Europäisches Patentamt
European Patent Office
Office européen des brevets

(11) EP 0 787 686 B1

(12) **EUROPÄISCHE PATENTSCHRIFT**

(45) Veröffentlichungstag und Bekanntmachung des Hinweises auf die Patenterteilung:
**23.12.1998 Patentblatt 1998/52**

(51) Int. Cl.⁶: **C02F 1/00**, B60S 3/00, C02F 9/00

(21) Anmeldenummer: 96112405.4

(22) Anmeldetag: **01.08.1996**

(54) **Verfahren und Vorrichtung zur Aufbereitung von Abwasser von Fahrzeugwaschanlagen**

Method and apparatus for treating waste water from car wasching installations

Procédé et dispositif pour le traitement d' eau usée provenant des installations de lavage de vehicules

(84) Benannte Vertragsstaaten:
AT DE ES FR

(30) Priorität: **13.09.1995 DE 19533846**

(43) Veröffentlichungstag der Anmeldung:
**06.08.1997 Patentblatt 1997/32**

(73) Patentinhaber:
**WESUMAT Fahrzeugwaschanlagen GmbH**
**D-86156 Augsburg (DE)**

(72) Erfinder: **Weigele, Gebhard**
**86356 Neusäss (DE)**

(74) Vertreter:
**Liebau, Gerhard, Dipl.-Ing.**
**Patentanwaltsbüro**
**Liebau & Liebau**
**Postfach 31 02 47**
**86063 Augsburg (DE)**

(56) Entgegenhaltungen:
**EP-A- 0 436 090          DE-A- 4 312 426**
**DE-C- 4 038 305          US-A- 4 168 231**

**Beschreibung**

Die Erfindung betrifft ein Verfahren und eine Vorrichtung zur Aufbereitung von Abwasser von Fahrzeugwaschanlagen, bei welchem das Abwasser aus der Waschanlage einem ersten Absetzbehälter zugeführt wird, das vorgereinigte Wasser von diesem in mindestens einen zweiten Absetzbehälter geleitet wird und das Wasser aus diesem den Wascheinrichtungen der Waschanlage, gegebenenfalls über einen ersten Vorlagebehälter, zugeführt wird.

Um Frischwasser einzusparen und das öffentliche Abwassernetz möglichst wenig zu belasten, ist es seit einiger Zeit üblich, das Abwasser von Fahrzeugwaschanlagen aufzubereiten und wiederzuverwenden. Damit jedoch das Abwasser wiederverwendet werden kann, müssen die in ihm enthaltenen Schmutzpartikel möglichst weitgehend entfernt werden, so daß in dem aufbereiteten Wasser nur noch Schmutzpartikel sehr kleiner Größe enthalten sind. Größere Schmutzpartikel würden nämlich bei Wascheinrichtungen, die mit rotierenden Bürsten oder rotierenden Tüchern arbeiten, Kratzer in der Lackoberfläche verursachen, weil sie zwischen die Borsten oder Tücher und die Fahrzeugoberfläche gelangen, und bei der Rotation dieser Waschelemente ein Stück über die Fahrzeugoberfläche gezogen werden. Größere Schmutzpartikel können dabei eine ähnliche abrasive Wirkung entfalten, wie Scheuersand.

Bei den bisher angewendeten Verfahren zur Aufbereitung von Abwasser von Fahrzeugwaschanlagen wird in der Regel das gesamte Wasser, welches wiederverwendet werden soll, so gut gereinigt, daß es ohne Kratzer zu verursachen, auch bei den Wascheinrichtungen verwendet werden kann, die mit rotierenden Bürsten oder Tüchern arbeiten. Da die gesamte wiederzuverwendende Wassermenge gereinigt werden muß, sind entsprechend leistungsfähige Abwasseraufbereitungsanlagen erforderlich. Deren Absetzbehälter müssen entsprechend groß bemessen sein, um das Abwasser durch Sedimentation der Schmutzpartikel zu reinigen. Dabei sinken die körnigen Stoffe, wie z.B. Sand, zum Boden des Absetzbehälters, wobei die leichtesten Schmutzpartikel die kleinste Sinkgeschwindigkeit haben. Da große Absetzbehälter nicht nur teuer in der Herstellung sind, sondern auch entsprechend viel Raum für ihre Unterbringung benötigen, wurde versucht, die Größe der Absetzbehälter durch zusätzliche Maßnahmen bei der Reinigung des Abwassers zu verringern. Diese zusätzlichen Maßnahmen, wie die Zuführung von Flockungsmittel und/oder der Einbau von Filtern, die das aus dem zweiten Absetzbehälter entnommene Wasser filtern, bevor es in den ersten Vorlagebehälter gelangt, um noch nicht abgesetzte Schmutzpartikel zu entfernen, erhöhen jedoch die Betriebs- und Herstellungskosten.

Der Erfindung liegt daher die Aufgabe zugrunde, ein Verfahren und eine Vorrichtung zur Aufbereitung von Abwasser von Fahrzeugwaschanlagen der eingangs erwähnten Art zu schaffen, mit dem bzw. der die Abwasseraufbereitung möglichst kostengünstig durchführbar ist.

Das Verfahren ist nach der Erfindung dadurch gekennzeichnet, daß ständig ein Teil des vorgereinigten Wassers aus dem ersten Absetzbehälter entnommen und berührungslos arbeitenden Wascheinrichtungen der Waschanlage, gegebenenfals über einen zweiten Vorlagebehälter zugeführt wird, während der andere Teil des vorgereinigten Wassers in den zweiten Absetzbehälter geleitet und das gereinigte Wasser aus diesem vorwiegend Wascheinrichtungen zugeführt wird, welche mit die Fahrzeugoberfläche berührenden Waschelementen ausgerüstet sind.

Die Anlage zur Aufbereitung von Abwasser von Fahrzeugwaschanlagen zur Durchführung dieses Verfahrens ist nach der Erfindung dadurch gekennzeichnet, daß die beiden Absetzbehälter jeweils nach Art eines Dortmundbrunnens (Dortmundbeckens) mit vertikaler abwärts und aufwärts geführter Strömung ausgebildet sind, daß der erste Absetzbehälter über Leitungen an berührungslos arbeitende Wascheinrichtungen der Waschanlage angeschlossen ist, und somit ständig ein Teil des vorgereinigten Wassers aus dem ersten Absetzbehälter den berührungslos arbeitenden Wascheinrichtungen zuführbar ist, und daß der zweite Absetzbehälter über Leitungen mit Wascheinrichtungen verbunden ist, welche mit die Fahrzeugoberfläche berührenden Waschelementen ausgerüstet sind.

Die Erfindung geht also von dem Gedanken aus, nicht mehr wie bisher, die gesamte Abwassermenge, die in Form von aufbereitetem Wasser wiederverwendet werden soll, durch die gesamte Wasseraufbereitungsanlage zu schicken, sondern nur noch einen Teil. Ein erster Teil des zum Waschen aufbereiteten Wassers wird als vorgereinigtes Wasser unmittelbar aus dem ersten Absetzbehälter entnommen und, gegebenenfalls unter Zwischenschaltung eines Vorlagebehälters, solchen Wascheinrichtungen zugeführt, die ohne direkte Berührung der Fahrzeugoberfläche arbeiten. Bei diesen berührungslos arbeitenden Wascheinrichtungen kann es sich zum Beispiel um einen Unterbodenwäscher handeln, welcher Spritzdüsen aufweist, um den Unterboden allein durch Wasserstrahlen zu reinigen. Ferner kann das vorgereinigte Wasser auch für die Hochdruckvorwäsche der Karosserie verwendet werden, bei der ebenfalls Wasser unter Hochdruck aus Düsen gegen die Fahrzeugoberfläche gespritzt wird. Hierbei spielt es keine Rolle, wenn das vorgereinigte Wasser noch Schmutzpartikel enthält. Da die vorgenannten Wascheinrichtungen nämlich berührungslos arbeiten, können diese Schmutzpartikel auf der Fahrzeugoberfläche auch keine Schleifspuren oder Kratzer hinterlassen. Auf diese Weise kann erreicht werden, daß nur ein kleinerer Teil des gesamten vorgereinigten Wassers in den zweiten Absetzbehälter gelangt, wobei dieser kleinere Teil weniger als die Hälfte des zum Waschen benötigten Abwassers sein kann. Dieser kleinere Teil von vorgereinigtem Wasser durchströmt den zweiten Absetzbehälter, der die gleiche Größe aufweisen kann wie der erste, mit einer geringeren Geschwindigkeit. Liegt die Geschwindigkeit (Steiggeschwindigkeit), mit der sich das Wasser im zweiten Absetzbehälter entgegen der nach unten absinkenden Schmutzpartikel aufwärtsbewegt, unter 1,5 m/h, so wird eine sehr gute Wasserqualität erreicht. Bei dieser Wasserqualität liegt die Partikelgröße erfahrungsgemäß unter 5 $\mu$m. Derartig gut gereinigtes Wasser kann dann ohne weitere Filtration den mit Waschelementen arbeitenden Wascheinrichtungen, wie z.B. rotierenden Bürsten oder rotierenden Walzen, mit Tüchern zugeführt werden. Die sehr kleinen Schmutzpartikel verursachen keine sichtbaren Kratzer auf der Lackoberfläche, vielmehr können sie einen polierenden Effekt haben. Da durch das zweite Absetzbecken nur noch ein Teil des vorgereinigten Wassers geleitet wird, ist es möglich, Absetzbehälter in Abmessungen zu verwenden, die mit einem Durchmesser von z.B. 2,5 m noch auf der Straße transportabel sind. Durch den Wegfall von Filtereinrichtungen werden die Anlagekosten und damit auch die Betriebskosten gesenkt. Eine weitere Senkung der Betriebskosten ist auch dadurch möglich, daß man ein geeignetes Flockungsmittel nur derjenigen Teilmenge von vorgereinigtem Abwasser beimischt, welche dem zweiten Absetzbehälter zugeführt wird. Man kann dadurch an Flockungsmittel einsparen. Neben dem Vorteil der schnelleren Sedimentation erübrigt sich durch diese Emulsionsspaltanlage auch der behördlich geforderte Leichtölabscheider bei der Einleitung überschüssigen Wassers in das öffentliche Kanalnetz.

Absetzbehälter, die nach dem Prinzip oder nach Art eines sogenannten Dortmundbrunnens (Dortmundbeckens) arbeiten, sind für eine Abwasseraufbereitungsanlage zur Durchführung des erfindungsgemäßen Verfahrens besonders geeignet. Sie haben nämlich einen großen Sedimentationswirkungsgrad und erfordern bei gleicher Leistung weniger Aufstellungsfläche als andere Absetzbehälter oder Absetzbecken. Außerdem können sie kostengünstig fabrikmäßig in Abmessungen gefertigt werden, die noch als Einheit auf der Straße transportiert werden können.

Vorteilhafte Ausgestaltungen der Erindung sind in den übrigen Ansprüchen gekennzeichnet.

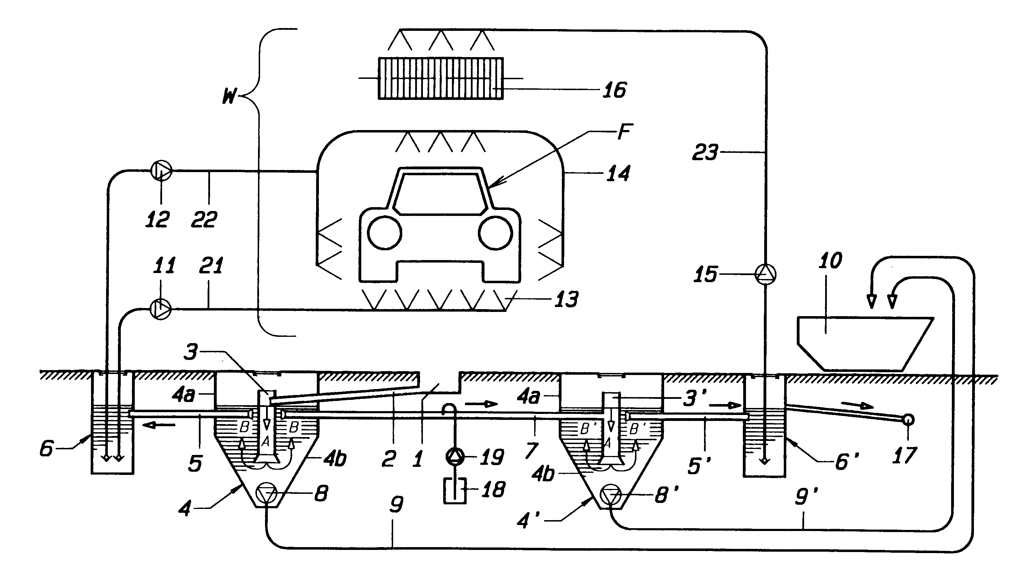

Die Erfindung wird in folgendem, anhand eines in der Zeichnung schematisch dargestellten Ausführungsbeispieles näher erläutert.

Waschwasser, welches zum Waschen eines Fahrzeuges F in der Fahrzeugwaschanlage W verwendet wurde, wird in der Sammelrinne 1 der Waschanlage gesammelt und strömt über das Ablaufrohr 2 in den ersten Absetzbehälter 4.

Dieser Absetzbehälter 4 ist genauso wie der zweite Absetzbehälter 4' nach Art eines Dortmundbrunnens ausgebildet. Jeder Absetzbehälter 4 bzw. 4' weist dabei einen im wesentlichen zylindrischen, oberen Abschnitt 4a und einen daran anschließenden, sich nach unten verjüngenden, kegelförmigen Abschnitt 4b auf. Im unteren Teil des unteren Abschnittes 4b setzt sich der Schmutz als Schlamm ab. Die beiden Absetzbehälter 4, 4' sind ferner jeweils mit einem vertikalen, zentralen Tauchrohr 3, 3' ausgerüstet. In den oberen Teil des jeweiligen Tauchrohres 3, 3' wird das zu reinigende Wasser eingeleitet, z.B. bei dem ersten Absetzbehälter 4 über das Ablaufrohr 2. Das vertikale Tauchrohr 3, 3' endet mit Abstand über dem Boden des kegelförmigen Abschnittes 4b. Auf diese Weise kann das zu reinigende Wasser zunächst in Richtung A bzw. A' im Tauchrohr 3, 3' nach unten strömen und steigt dann im Ringraum zwischen dem jeweiligen Tauchrohr 3, 3' und dem kegelförmigen Abschnitt 4b bzw. zylindrischen Abschnitt 4a in Richtung B bzw. B' nach oben. In Abhängigkeit von der Steiggeschwindigkeit in Richtung B sedimentieren die im Wasser enthaltenen Schmutzpartikel mehr oder weniger gut, je nachdem, wie groß ihre Sinkgeschwindigkeit ist. Die leichtesten Partikel haben dabei die kleinste Sinkgeschwindigkeit.

In dem ersten Absetzbehälter 4, welcher von dem gesamten zu reinigenden Abwasser durchströmt wird, erfolgt zunächst eine Vorreinigung des Abwassers. Ein Teil des vorgereinigten Wassers strömt über die Leitung 5 in einen Vorlagebehälter 6, der hier als "zweiter" Vorlagebehälter bezeichnet wird. Pumpen 11, 12 saugen das vorgereinigte Wasser aus dem Vorlagebehälter 6 an und fördern es über die Leitungen 21, 22 zu berührungslos arbeitenden Wascheinrichtungen 13, 14 der Waschanlage W. Das Bezugszeichen 13 kennzeichnet dabei einen Unterbodenwäscher. Mit 14 ist eine Hochdruckvorwascheinrichtung bezeichnet. Beide Wascheinrichtungen 13, 14 arbeiten nur mit Spritzdüsen, so daß keine unmittelbare Berührung zwischen Wascheinrichtung und der Oberfläche des zu waschenden Fahrzeuges F stattfindet. Deshalb kann auch das vorgereinigte Wasser, welches noch Schmutzpartikel über 5 Um enthält, zum Waschen wiederverwendet werden, ohne Kratzer auf der Fahrzeugoberfläche zu hinterlassen.

Ein anderer Teil des vorgereinigten Wassers, wobei es sich vorzugsweise um weniger als die Hälfte der insgesamt zu reinigenden Abwassermenge handeln kann, wird über die Leitung 7 aus dem ersten Absetzbehälter 4 in das Tauchrohr 3' des zweiten Absetzbehälters 4' geleitet, und dort in der beschriebenen Weise durch Führung des Wasserstromes in Richtung A' nach unten und Steigbewegung in Richtung B' nach oben gereinigt, wobei die Schmutzpartikel zum Boden des Absetzbehälters 4' absinken. Da jedoch der zweite Absetzbehälter 4' nur von einem Bruchteil der gesamten Wassermenge durchströmt wird, ist auch die Steiggeschwindigkeit des Wassers in Richtung B' entsprechend geringer und damit kleiner als die Sinkgeschwindigkeit kleinerer Partikel. Auf diese Weise wird in dem zweiten Absetzbehälter 4' eine sehr gute Wasserqualität erreicht, wie nachstehend anhand eines Rechenbeispieles noch näher erläutert wird. Das im zweiten Absetzbehälter 4' zu hoher Wasserqualität gereinigte Wasser wird über die Leitung 5' in den Vorlagebehälter 6' geleitet, der hier als "erster" Vorlagebehälter bezeichnet wird. Eine Pumpe 15 entnimmt das sehr gut gereinigte Wasser aus dem ersten Vorlagebehälter 6' und führt es einer mit Waschelementen arbeitenden Wascheinrichtung 16 zu. Hierbei kann es sich um eine rotierende Bürste handeln, die mit Borsten besetzt ist, oder um eine rotierende, mit Tüchern oder Lappen ausgerüstete Walze.

Der in den Absetzbehältern 4, 4' abgesetzte Schlamm wird mittels der Tauchpumpen 8, 8' über Leitungen 9, 9' in einen Container 10 entsorgt. Die beiden Absetzbehälter 4, 4' können gegebenenfalls im oberen Bereich ihrer zylindrischen Abschnitte 4a auch mit jeweils einer nicht dargestellten Überlaufrinne versehen sein, wie sie bei Dortmundbrunnen üblich ist.

Um Waschmittel und Konservierungsmittel aus dem Abwasser zu entfernen und die Sedimentation zu beschleunigen, kann dem zu reinigenden Abwasser auch noch ein Flockungsmittel zudosiert werden. Zu diesem Zweck wird das in dem Vorratsbehälter 18 enthaltene Flockungsmittel über eine Dosierpumpe 19 zweckmäßig in die Leitung 7 gepumpt, bevor ein Teil des vorgereinigten Wassers das Tauchrohr 3' des zweiten Absetzbehälters 4' erreicht. Da hier nur ein Teil des vorgereinigten Wassers mit Flockungsmittel versetzt wird und nicht die gesamte Abwassermenge, wird auch entsprechend weniger Flockungsmittel verbraucht.

Die Wirksamkeit der neuen Anlage zeigt das nachfolgende Rechenbeispiel auf. Dabei wird angenommen, daß die drei Pumpen 11, 12 und 15 jeweils eine durchschnittliche Pumpenleistung von 6 $m^3$/h aufweisen und der Durchmesser jedes Absetzbehälters 4, 4' im zylindrischen Teil 4a etwa 2,5 m betrage. Dies ergibt in jedem Absetzbehälter eine wirksame Fläche von ca. 4,5 $m^2$. Die Steiggeschwindigkeit im ersten Absetzbehälter 4 beträgt demnach:

$$3 \times 6\,m^3/h : 4,5\,m^2 = 4\,m/h.$$

Demgegenüber beträgt die Steiggeschwindigkeit im zweiten Absetzbehälter 4', da die Pumpe 15 für sich alleine nur 6 $m^3$/h fördert:

$$6\,m^3/h : 4,5\,m^2 = 1,33\,m/h.$$

Bei einer Steiggeschwindigkeit von unter 1,5 m/h wird eine sehr gute Wasserqualität erreicht. Bei dieser Wasserqualität liegt die Partikelgröße erfahrungsgemäß unter 5 μm. Es wäre daher möglich, mit Wasser solcher Qualität auch Hochdruck-Kolbenpumpen zu versorgen, ohne einen wesentlich erhöhten Verschleiß in Kauf nehmen zu müssen. Derartige Hochdruck-Kolbenpumpen sind dann erforderlich, wenn spezielle Hochdruckwascheinrichtungen mit einem Druck von über 20 bar versorgt werden sollen. Es kann sich hierbei z.B. um neuartige Hochdruck-Radwäscher handeln. In diesem Fall werden dann also nicht nur mit Waschelementen arbeitende Wascheinrichtungen mit dem sehr gut gereinigten Wasser aus dem ersten Vorlagebehälter 6' versorgt, sondern auch diese berührungslos arbeitenden Hochdruck-Radwäscher. Da jedoch diese Hochdruck-Radwäscher immer nur kurzzeitig während des Waschens eines Rades in Betrieb sind und auch gegenüber der Hochdruck-Vorwascheinrichtung 14 bzw. der Unterbodenwascheinrichtung 13 nur verhältnis wenig Wasser verbrauchen, ergibt sich noch immer der Vorteil, daß nur ein Teil des vorgereinigten Wassers in dem zweiten Absetzbehälter 4' gereinigt werden muß.

Falls eine noch höhere Wasserqualität, z.B. zum Abspülen der Fahrzeuge nach Beendigung der Waschvorgänge vor dem Tocknen benötigt wird, könnte man dem zweiten Absetzbehälter 4' neben dem ersten Vorlagebehälter 6' auch einen weiteren, gleichartigen, nicht dargestellten Absetzbehälter nachschalten. Bei einer Wasserentnahme von 3 $m^3$/h aus diesem dritten Absetzbehälter würde sich eine Steiggeschwindigkeit von nur 0,66 m/h und damit eine entsprechend sehr gute Wasserqualität ergeben.

Durch die Zugabe von Flockungsmittel vor dem zweiten Absetzbehälter 4' und die damit eingeleitete Emulionsspannung erübrigt sich neben dem Vorteil der schnelleren Sedimentation auch ein behördlich geförderter Leichtöl-Abscheider bei der Abgabe überschüssigen Wassers in den Kanal 17 des öffentlichen Abwasserkanalnetzes.

Abschließend seien die Vorteile der Erfindung nochmals kurz zusammengefaßt. Die Anlage zur Abwasseraufbereitung hat nur einen geringen Platzbedarf. Die Absetzbehälter können fabrikseitig gefertigt und durch Straßentransport zum Aufstellungsort gebracht werden. Wegen des geringen Platzbedarfs ist auch eine oberirdische Aufstellung möglich. Bei der Anlage handelt es sich um ein selbsttätig arbeitendes System ohne wesentlichen Wartungsaufwand. Das System dient gleichzeitig als Leichtöl-Abscheider. Eventuell eintretendes Leichtöl verbleibt im Tauchrohr 3 bzw. 3'. Falls erforderlich, kann dort ein Ölsensor mit Alarmgabe installiert werden.

Die Erfindung wurde vorstehend unter Verwendung eines ersten und eines zweiten Vorlagebehälters beschrieben. Diese haben den Vorteil, daß das Wasser besser bevorratet werden kann und daß die Vorlagebehälter 6, 6' in der Nähe des Aufstellungsortes der Pumpen 11, 12, 15 vorgesehen werden können. Es werden damit ungünstige lange Saugleitungen vermieden.

Gegebenenfalls könnte jedoch auch auf einen oder beide Vorlagebehälter verzichtet werden. Die Absetzbehälter 4, 4' müßten dann um die Menge des bereitzustellenden Wassers tiefer gebaut werden, wenn dieselbe Wasserqualität erreicht werden soll. Bei geeigneter Ausführung des Sauganschlusses der Pumpen 11, 12, 15 könnte dann das Wasser direkt aus den Absetzbehältern 4, 4' im Bereich der Leitungen 5, 5' gesaugt werden.

**Patentansprüche**

1. Verfahren zur Aufbereitung von Abwasser von Fahrzeugwaschanlagen, bei welchem das Abwasser aus der Waschanlage einem ersten Absetzbehälter zugeführt wird, das vorgereinigte Wasser von diesem in mindestens einen zweiten Absetzbehälter geleitet wird, und das Wasser aus diesem den Wascheinrichtungen der Waschanlage, gegebenenfalls über einen ersten Vorlagebehälter, zugeführt wird, **dadurch gekennzeichnet, daß** ständig ein Teil des vorgereinigten Wassers aus dem ersten Absetzbehälter entnommen und berührungslos arbeitenden Wascheinrichtungen der Waschanlage, gegebenenfalls über einen zweiten Vorlagebehälter, zugeführt wird, während der andere Teil des vorgereinigten Wassers in den zweiten Absetzbehälter geleitet und das gereinigte Wasser aus diesem vorwiegend Wascheinrichtungen zugeführt wird, welche mit die Fahrzeugoberfläche berührenden Waschelementen ausgerüstet sind.

2. Verfahren nach Anspruch 1, **dadurch gekennzeichnet, daß** das ständig aus dem ersten Absetzbehälter entnommene, vorgereinigte Wasser dem zweiten Vorlagebehälter ohne weitere Reinigung zugeführt wird.

3. Verfahren nach Anspruch 1 oder 2, **dadurch gekennzeichnet, daß** das aus dem zweiten Absetzbehälter entnommene Wasser dem ersten Vorlagebehälter ohne weitere Reinigung zugeführt wird.

4. Verfahren nach einem der Ansprüche 1 - 3, **dadurch gekennzeichnet, daß** dem Wasser vor dem Einleiten in den ersten und/oder zweiten Absetzbehälter ein Flockungsmittel zugemischt wird.

5. Verfahren nach Anspruch 1, 2 oder 4, **dadurch gekennzeichnet, daß** ein Teil des gereinigten Wassers aus dem zweiten Absetzbehälter einem dritten Absetzbehälter zugeführt und das Wasser aus diesem insbesondere zum Abspülen der Fahrzeuge verwendet wird.

6. Verfahren nach einem der Ansprüche 1 - 5, **dadurch gekennzeichnet, daß** Absetzbehälter nach Art von Dortmundbrunnen mit vertikal abwärts und aufwärts geführter Strömung verwendet werden.

7. Verfahren nach einem der Ansprüche 1 - 6, **dadurch gekennzeichnet, daß** mindestens die Hälfte des zum Waschen benötigten Wassers als vorgereinigtes Wasser aus dem ersten Absetzbehälter entnommen wird.

8. Anlage zur Aufbereitung von Abwasser von Fahrzeugwaschanlagen zur Durchführung des Verfahrens nach einem der vorhergehenden Ansprüche, bei welcher an die Abwasserseite der Waschanlage mindestens zwei hintereinander geschaltete Absetzbehälter und gegenbenenfalls ein mit dem zweiten Absetzbehälter verbundener erster Vorlagebehälter vorgesehen sind, von dem das gereinigte Wasser den Wascheinrichtungen der Waschanlage zuführbar ist, **dadurch gekennzeichnet, daß** die beiden Absetzbehälter (4, 4') jeweils nach Art eines Dortmundbrunnens (Dortmundbeckens) mit vertikaler abwärts und aufwärts geführter Strömung ausgebildet sind, daß der erste Absetzbehälter (4) über Leitungen(5, 21, 22) an berührungslos arbeitende Wascheinrichtungen (13, 14) der Waschanlage angeschlossen ist und somit ständig ein Teil des vorgereinigten Wassers aus dem ersten Absetzbehälter (4) den berührungslos arbeitenden Wascheinrichtungen (13, 14) zuführbar ist, und daß der zweite Absetzbehälter (4') über Leitungen (5', 23) mit Wascheinrichtungen (16) verbunden ist, welche mit die Fahrzeugoberfläche berührenden Waschelementen ausgerüstet sind.

9. Anlage nach Anspruch 6, **dadurch gekennzeichnet, daß** den Absetzbehältern (4, 4') jeweils Vorlagebehälter (6, 6') nachgeschaltet sind.

10. Anlage nach Anspruch 9, **dadurch gekennzeichnet, daß** die Vorlagebehälter (6, 6') jeweils direkt mit dem zugehörigen Absetzbehälter (4, 4') über Leitungen (5, 5') verbunden sind.

11. Anlage nach Anspruch 6, 9 oder 10, **dadurch gekennzeichnet, daß** im Zulauf (2, 7) zu dem ersten und/oder dem zweiten Absetzbehälter (4, 4') eine Einleitung für ein Flockungsmittel vorgesehen ist.

12. Anlage nach einem der Ansprüche 8 - 11, **dadurch gekennzeichnet, daß** dem zweiten Absetzbehälter (4') außer dem ersten Vorlagebehälter (6') ein dritter Absetzbehälter nachgeschaltet ist.

13. Anlage nach einem der Ansprüche 8 - 12, **dadurch gekennzeichnet, daß** jeder Absetzbehälter (4, 4') einen im wesentlichen zylindrischen, oberen Abschnitt (4a) und einen daran anschließenden, sich nach unten verjüngenden, kegelförmigen Abschnitt (4b) sowie im Zentrum ein vertikales Tauchrohr (3, 3') aufweist, welches mit Abstand über dem Boden des kegelförmigen Abschnittes (4b) endet und in dessen oberen Teil die Zuleitung (2, 7) für das zu reinigende Wasser mündet.

## Claims

1. Method of treating waste water from car washing installations, in which the waste water from the washing installation is passed to a first settlement container, the pre-cleaned water is passed from this into at least one second settlement container, and the water from this is passed to the washing devices of the washing installation, if necessary via a first collecting container, characterised in that a portion of the pre-cleaned water is permanently removed from the first settlement container and passed to washing devices operating without contact of the washing installation, if necessary via a second collecting container, while the other portion of the pre-cleaned water is passed into the second settlement container and the cleaned water from this is predominantly passed to washing devices which are fitted with wash elements contacting the vehicle surface.

2. Method according to claim 1, characterised in that the pre-cleaned water permanently removed from the first settlement container is passed to the second collecting container without further cleaning.

3. Method according to claim 1 or 2, characterised in that the water removed from the second settlement container is passed to the first collecting container without further cleaning.

4. Method according to one of claims 1 to 3, characterised in that a flocculent is mixed to the water before its introduction into the first and/or second settlement container.

5. Method according to claim 1,2 or 4, characterised in that a portion of the cleaned water from the second settlement container is passed to a third settlement container, and the water from this is used in particular for rinsing the vehicles.

6. Method according to one of claims 1 to 5, characterised in that settlement containers are used of the Dortmund tank type with a flow guided vertically downwards and upwards.

7. Method according to one of claims 1 to 6, characterised in that at least half of the water required for washing is removed as pre-cleaned water from the first settlement container.

8. Installation for treating waste water from car washing installations for carrying out the method according to one of the preceding claims, in which there are provided at the waste water side of the washing installation at least two successive settlement containers and if necessary a first collecting container connected to the second settlement container, from which the cleaned water can be passed to the washing devices of the washing installation, characterised in that the two settlement containers (4,4') are respectively formed in the manner of a Dortmund tank (Dortmund vat) with a flow guided vertically downwards and upwards, in that the first settlement container (4) is connected via pipes (5,21,22) to wash devices (13,14) operating without contact of the washing installation, and thus a portion of the pre-cleaned water can be permanently passed from the first settlement container (4) to the wash devices (13,14) operating without contact, and in that the second settlement container (4') is connected via pipes (5',23) to wash devices (16), which are fitted with wash elements contacting the vehicle surface.

9. Installation according to claim 8, characterised in that the settlement containers (4,4') are respectively succeeded by collecting containers (6,6').

10. Installation according to claim 9, characterised in that the collecting containers (6,6') are respectively connected directly to the associated settlement container (4,4') via pipes (5,5').

11. Installation according to claim 8,9 or 10, characterised in that there is provided in the feed (2,7) to the first and/or second settlement container (4,4') a means of introduction for a flocculent agent.

12. Installation according to one of claims 8 to 11, characterised in that the second settlement container (4') is succeeded, apart from the first collecting container (6'), by a third settlement container.

13. Installation according to one of claims 8 to 12, characterised in that each settlement container (4,4')has a substantially cylindrical upper section (4a) and connecting therewith and tapering downwards a conical section (4b), and in the centre a vertical submerged pipe (3,3'), which terminates at a distance above the base of the conical section (4b), and into whose upper portion the feed pipe (2,7) for the water to be cleaned opens.

## Revendications

1. Procédé pour le traitement des eaux usées provenant d'installations de lavage de véhicules, selon lequel les eaux usées provenant de l'installation de lavage sont acheminées dans un premier réservoir de décantation, l'eau préalablement assainie étant ensuite transférée dans au moins un deuxième réservoir de décantation, avant d'alimenter les dispositifs de lavage de l'installation de lavage, le cas échéant par l'intermédiaire d'un premier réservoir collecteur, caractérisé en ce qu'en permanence, une partie de l'eau préalablement assainie est prélevée dans le premier réservoir de décantation et alimente des dispositifs de lavage sans contact de l'installation de lavage, le cas échéant par l'intermédiaire d'un deuxième réservoir collecteur, tandis que l'autre partie de l'eau préalablement assainie est transférée dans le deuxième réservoir de décantation et que l'eau traitée provenant de ce dernier alimente principalement des dispositifs de lavage équipés d'éléments de lavage en contact avec la surface des véhicules.

2. Procédé selon la revendication 1, caractérisé en ce que l'eau préalablement assainie qui est prélevée en permanence dans le premier réservoir de décantation alimente le deuxième réservoir de décantation sans être davantage assainie.

3. Procédé selon la revendication 1 ou 2, caractérisé en ce que l'eau prélevée dans le deuxième réservoir de décantation alimente le premier réservoir collecteur sans être davantage assainie.

4. Procédé selon l'une des revendications 1 à 3, caractérisé en ce qu'un floculant est mélangé à l'eau avant qu'elle ne soit déversée dans le premier et/ou le deuxième réservoir de décantation.

5. Procédé selon la revendication 1, 2 ou 4, caractérisé en ce qu'une partie de l'eau épurée provenant du deuxième réservoir de décantation alimente un troisième réservoir de décantation, et en ce que l'eau provenant de ce dernier est notamment utilisée pour rincer les véhicules.

6. Procédé selon l'une des revendications 1 à 5, caractérisé en ce que sont utilisés des réservoirs de décantation de type Dortmund, avec circulation verticale descendante et ascendante.

7. Procédé selon l'une des revendications 1 à 6, caractérisé en ce qu'au moins la moitié de l'eau nécessaire au lavage est prélevée dans le premier réservoir de décantation à titre d'eau préalablement assainie.

8. Installation pour le traitement des eaux usées provenant d'installations de lavage de véhicules, destinée à mettre en oeuvre le procédé selon l'une des revendications précédentes, selon laquelle du côté des eaux usées de l'installation de lavage sont prévus au moins deux réservoirs de décantation successifs et, le cas échéant, un premier réservoir collecteur communiquant avec le deuxième réservoir de décantation, l'eau épurée provenant de ce premier réservoir collecteur pouvant alimenter les dispositifs de lavage de l'installation de lavage, caractérisée en ce que les deux réservoirs de décantation (4, 4') sont chacun réalisés à la manière d'un décanteur de type Dortmund, avec circulation verticale descendante et ascendante, en ce que le premier réservoir de décantation (4) est raccordé par le biais de conduites (5, 21, 22) à des dispositifs de lavage sans contact (13, 14) de l'installation de lavage et en ce qu'ainsi une partie de l'eau préalablement assainie provenant du premier réservoir de décantation (4) peut alimenter en permanence les installations de lavage (13, 14) fonctionnant sans contact, et en ce que le deuxième réservoir de décantation (4') est raccordé par le biais de conduites (5', 23) à des dispositifs de lavage (16) qui sont équipés d'éléments de lavage en contact avec la surface des véhicules.

9. Installation selon la revendication 8, caractérisée en ce que des réservoirs collecteurs (6, 6') sont chaque fois montés en aval des réservoirs de décantation (4, 4').

10. Installation selon la revendication 9, caractérisée en ce que les réservoirs collecteurs (6, 6') sont chacun reliés directement au réservoir de décantation (4, 4') qui leur est associé par le biais de conduites (5, 5').

11. Installation selon la revendication 8, 9 ou 10, caractérisée en ce que dans la conduite d'amenée (2, 7) menant au premier et/ou au deuxième réservoir de décantation (4, 4') est prévu un accès pour introduire un floculant.

12. Installation selon l'une des revendications 8 à 11, caractérisée en ce qu'en aval du deuxième réservoir de décantation (4') est monté un troisième réservoir de décantation en plus du premier réservoir collecteur (6').

13. Installation selon l'une des revendications 8 à 12, caractérisée en ce que chaque réservoir de décantation (4, 4') présente une partie supérieure (4a) essentiellement cylindrique et une partie inférieure (4b) conique se rétrécissant en bas qui est raccordée à la précédente, ainsi qu'au centre, un tube plongeur (3, 3') qui se termine à distance au-dessus du fond de la partie conique (4b) et dans la partie supérieure duquel débouche la conduite d'amenée (2, 7) pour l'eau à assainir.